# EUROPÄISCHE PATENTSCHRIFT

(11) **EP 2 847 483 B1**
(45) Veröffentlichungstag und Bekanntmachung des Hinweises auf die Patenterteilung: **14.03.2018**
(21) Anmeldenummer: 13723734.3
(22) Anmeldetag: 10.05.2013
(51) Int. Cl.: F16D 55/226, F16D 65/18

(54) **SCHEIBENBREMSE FÜR EIN NUTZFAHRZEUG**
DISC BRAKE FOR A UTILITY VEHICLE
FREIN À DISQUE POUR VÉHICULE UTILITAIRE

(30) Priorität: 11.05.2012 DE 102012009424
(43) Veröffentlichungstag der Anmeldung: 18.03.2015
(73) Patentinhaber: KNORR-BREMSE Systeme für Nutzfahrzeuge GmbH, 80809 München (DE)
(72) Erfinder: BAUMGARTNER, Johann, 85368 Moosburg (DE); WEGGARTNER, Robert, 84347 Pfarrkirchen (DE); KIELBASA, Rudolf, 85757 Karlsfeld (DE); WERTH, Alexander, 80999 München (DE)
(86) Internationale Anmeldenummer: PCT/EP2013/059703
(87) Internationale Veröffentlichungsnummer: WO 2013/167724

(56) Entgegenhaltungen:
- WO-A1-2011/101076
- DE-A1- 4 416 175
- US-A- 5 400 875
- US-A1- 2004 195 051
- US-A1- 2004 222 052

## Beschreibung

Die Erfindung betrifft eine Scheibenbremse für ein Nutzfahrzeug nach dem Oberbegriff des Anspruchs 1.

Bei einer derartigen Scheibenbremse wie sie aus der DE 195 15 063 C2 bekannt ist, wird die Zuspanneinrichtung beispielsweise pneumatisch betätigt, d.h., die Zuspannkraft wird über einen mit einem Bremshebel in Wirkverbindung stehenden pneumatisch beaufschlagten Bremszylinder erzeugt. Prinzipiell kann die Zuspannkraft auch hydraulisch oder elektromechanisch aufgebracht werden.

Um eine ausreichende, auf die Bremsscheibe wirkende Bremskraft zu erzielen, dient der Bremshebel als mechanische Übersetzung, wobei dieser sich einerseits an einem Lagersitz des Bremssattels schwenkbar abstützt, während andererseits ein angeformter Exzenter an einer bewegbaren Brücke anliegt, in der Stellspindeln angeordnet sind, die mit einem gegen eine Bremsscheibe pressbaren Bremsbelag in Wirkverbindung stehen.

Beim Verschwenken des Bremshebels gleitet der Exzenter entlang einer kreisbogenförmigen Bahn der Brücke, unter deren Verschiebung in Richtung der Bremsscheibe.

Aufgrund der unterschiedlichen Schwenkbahnen des bremssattelseitigen Schwenklagers einerseits und des brückenseitigen Exzenterlagers andererseits wird beim zuspannenden Betätigen des Bremshebels die Brücke mit den darin angeordneten Bremsstempeln gekippt, wobei ein solches Kippen sowohl bei einer Schwenklagerung des Bremshebels am Bremssattel wie auch bei einer Schwenklagerung an der Brücke und Exzenterlagerung am Rücken des Bremssattels eintritt.

Die Kippbewegung führt zu Relativbewegungen der Bauteile sowohl der Zuspanneinrichtung, gebildet aus der Brücke und den Bremsstempeln wie auch eines Nachstellsystems und der Bremsbeläge. In der Folge können Funktionsstörungen der Bremse auftreten. Zumindest hat dieses Betriebsverhalten Einfluss auf die Standzeit der Scheibenbremse, so dass sich insgesamt eine unbefriedigende Situation ergibt.

Insbesondere bei einer Scheibenbremse, bei der, wie gemäß der Gattung, ein Aufnahmeraum des Bremssattels auf seiner der Bremsscheibe zugewandten Seite mit einer Bodenplatte verschlossen ist, können insbesondere Radialkräfte nicht in dem gewünschten und ausreichenden Maß aufgenommen werden.

In der WO 2011/101076 A1 ist eine Scheibenbremse entsprechend der Gattung offenbart, die zur Abstützung eines beim Bremsen auftretenden, auf die Brücke einwirkenden Kippmomentes Abstützflächen am Bremssattel aufweist, die, bezogen auf die Mittelachse der Bremsscheibe, radial angeordnet sind.

Aus der US 5 400 875 A ist eine Scheibenbremse bekannt, bei der die in einer Brücke gehaltene Stellspindel auf der der Bremsscheibe zugewandten Seite den Bremssattel durchtritt. Eine Bodenplatte ist hier nicht vorgesehen. Dabei erfolgt die Abdichtung zwischen dem Bremssattel und einem einen zugeordneten Bremsbelag kontaktierenden Druckstück durch einen Faltenbalg.

Schließlich ist der US 2004/0222052 A1 eine Scheibenbremse entnehmbar, bei der als Stellspindeln Kolben in axial ausgerichteten Führungsansätzen einer Bodenplatte axial verschiebbar sind. Entgegen einer gattungsgemäßen Scheibenbremse weist diese Konstruktion keine die Stellspindeln aufnehmende Brücke auf.

Der Erfindung liegt die Aufgabe zugrunde, eine Scheibenbremse der gattungsgemäßen Art so weiterzuentwickeln, dass ihre Funktions- und Betriebssicherheit verbessert und ihre Standzeit erhöht wird.

Diese Aufgabe wird durch eine Scheibenbremse mit den Merkmalen des Anspruchs 1 gelöst.

Durch die erfindungsgemäße Ausbildung wird die Brücke derart gehalten, dass eine Auslenkung weder in Drehrichtung der Bremsscheibe noch in Richtung quer dazu, also in radialer Richtung und hier vorzugsweise, bezogen auf die Mittenachse der Bremsscheibe, nach außen gerichtet.

Dabei wird die beim Bremsen auftretende Hauptbelastung, nämlich die in Drehrichtung der Bremsscheibe, von vorzugsweise planen Stützflächen des Bremssattels aufgenommen, an denen angepasste Stützflächen der Brücke anliegen. D.h., die auftretenden Umfangskräfte werden von der Brücke direkt an den Bremssattel abgeleitet, wobei allerdings die, bezogen auf die Bremsscheibe axiale Bewegung der Brücke uneingeschränkt möglich ist.

Die die Kippbewegung der Brücke bewirkenden radialen Kräfte werden, gemäß der Erfindung, von der Bodenplatte aufgenommen, wozu sowohl die Brücke wie auch die Bodenplatte aneinander liegende Stützbereiche aufweisen und vorzugsweise gleichfalls plan ausgebildet sind. Hierdurch wird eine behinderungsfreie Relativbewegung der Brücke zur Bodenplatte ermöglicht, wie sie sich beim Zuspannen der Bremse ergibt.

Die von der Bodenplatte durch die Abstützung aufzunehmenden Kräfte sind relativ gering, so dass die Befestigungsmittel, vornehmlich Schrauben, mit denen die Bodenplatte am Bremssattel befestigt ist, lediglich gering belastet werden. Eine Änderung der Dimensionierung bzw. Anzahl der Befestigungsmittel ist nicht erforderlich, wodurch sich insoweit eine kostenneutrale Realisierung der Erfindung ergibt.
Die Erfindung ist besonders effektiv in einer Kombination mit einer Anordnung, bei der das Exzenterlager des Bremshebels auf der der Bremsscheibe abgewandten Seite, also am Rücken des Bremssattels vorgesehen ist. Dadurch ergibt sich gegenüber einer Anordnung des Exzenterlagers an der Brücke etwa eine Verdoppelung des Lagerabstands und demzufolge eine Halbierung der unerwünschten Kippbewegung der Brücke.
Nach einer vorteilhaften Weiterbildung der Erfindung sind die miteinander korrespondierenden Stützflächen der Brücke und des Bremssattels angeformt, d.h. bei deren Herstellung als Gussteile mit eingebracht. Eine Bearbeitung der Stützflächen ist nicht zwingend erforderlich, so dass auch hieraus keine zusätzlichen Kosten entstehen, was insofern erwähnenswert ist, als ständige Bestrebungen dahingehen, technische Weiterentwicklungen bei solchen Serienprodukten, wie sie Scheibenbremsen darstellen, zumindest kostenneutral zu verwirklichen. Erfindungsgemäß stützt sich die Brücke bei einer Bremsung zusätzlich an der Bodenplatte ab, wozu daran, bezogen auf die Mittelachse der Bremsscheibe, oberhalb der Brücke ein Anschlagelement angeordnet ist, an dem eine Anschlagfläche der Brücke anliegt. Da eine Bodenplatte üblicherweise aus Blech, durch Stanzen und/oder Prägen geformt ist, kann das Anschlagelement quasi in einem Arbeitsgang ausgeformt werden. Prinzipiell denkbar ist aber auch, Anschlagelemente separat auszubilden und form-, kraft- und/oder stoffschlüssig mit der Bodenplatte im Übrigen zu verbinden.
Weitere vorteilhafte Ausbildungen der Erfindung sind in den Unteransprüchen gekennzeichnet.
Ein Ausführungsbeispiel der Erfindung ist nachfolgend anhand der beigefügten Zeichnungen beschrieben.
Es zeigen:
- Figur 1: einen Teilausschnitt einer erfindungsgemäßen Scheibenbremse in einer geschnittenen Draufsicht
- Figur 2: die Scheibenbremse nach Figur 1 in einer geschnittenen Seitenansicht
- Figur 3: einen Schnitt durch die Scheibenbremse gemäß der Linie III-III in Figur 2
- Figur 4: einen Teil der Scheibenbremse in einer Explosionsdarstellung.

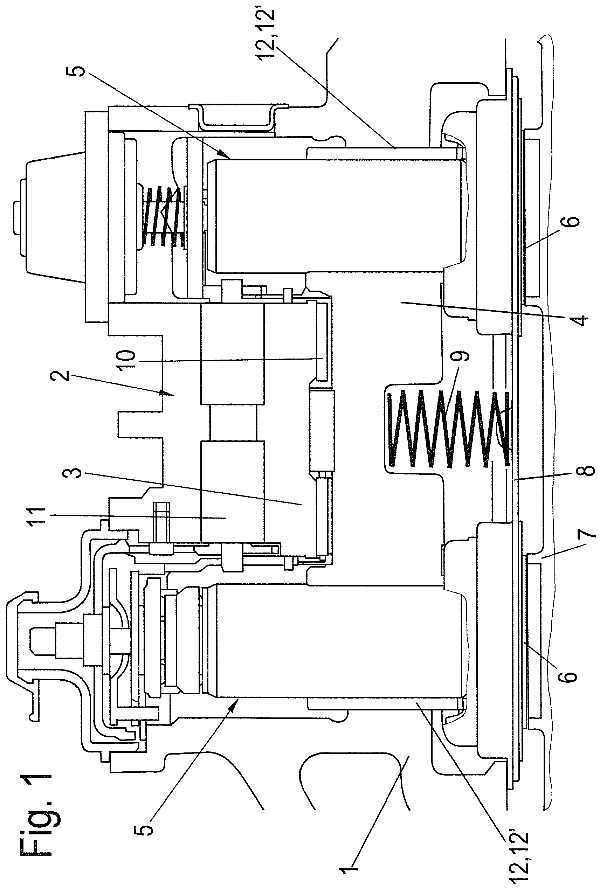

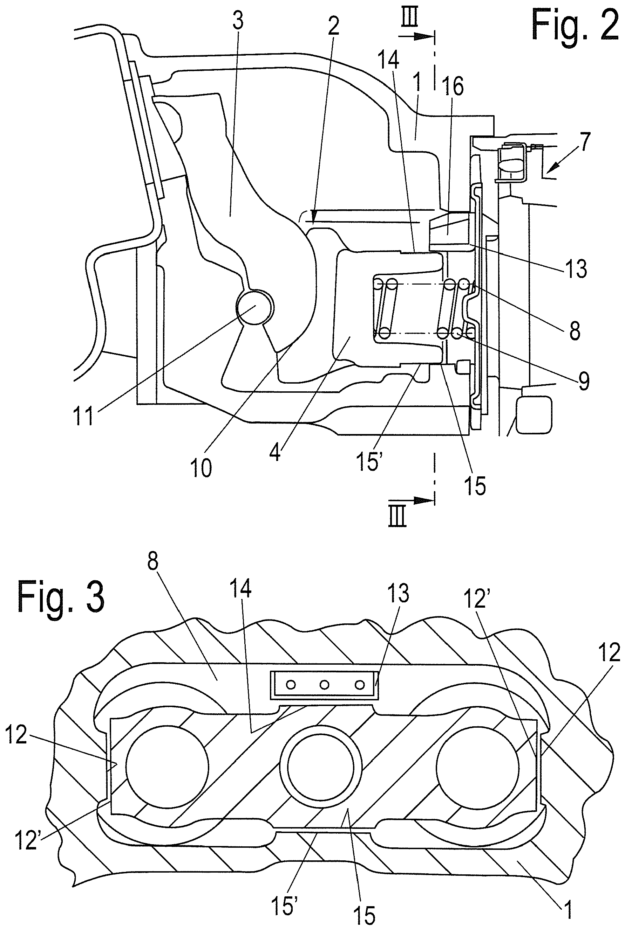

In den Figuren 1 und 2 ist ein Teil einer Scheibenbremse erkennbar, mit einer in einem Bremssattel 1 angeordneten Zuspanneinrichtung 2, mit der bei einer Bremsung über zwei parallel und abständig zueinander in einer Brücke 4 angeordneten Stellspindeln 5 ein Bremsbelag 7 an eine nicht dargestellte Bremsscheibe pressbar ist. Hierzu sind an den dem Bremsbelag 7 zugewandten Ende jeder Stellspindel 5 ein Druckstück 6 angeordnet, das an dem Bremsbelag 7 anliegt.

Die beiden Stellspindeln 5 sind durch eine Bodenplatte 8 geführt, die einen Aufnahmeraum des Bremssattels 1 verschließt.

Die Zuspanneinrichtung 2 weist einen Bremshebel 3 auf, der schwenkbar an einer Schwenkwelle 11 anliegt, die sich andererseits an einem Rücken des Bremssattels 1 abstützt. Im Schwenkbereich ist der Bremshebel 3 als Exzenter ausgebildet, der mit einer angepassten Ausnehmung in der Brücke 4 ein Exzenterlager 10 bildet.

Bei einer Bremsung wird die Brücke 4 durch Verschwenken des Bremshebels 3 und unter Mitnahme der Stellspindeln 5 in Richtung der Bremsscheibe des Bremsbelages 7 verschoben, während die Rückstellung nach einem Lösen der Bremse mittels einer Druckfeder 9 erfolgt, die sich einerseits an der Brücke 4 und andererseits an der Bodenplatte 8 abstützt.

Erfindungsgemäß liegt bei einer Bremsung die Brücke 4 in Drehrichtung der Bremsscheibe seitlich am Bremssattel 1 an. Wie insbesondere die Figur 3 sehr deutlich wiedergibt, sind hierzu in der Brücke 4 und zugeordnet am Bremssattel 1 Stützflächen 12, 12' vorgesehen, die plan ausgebildet sind und damit eine ungehinderte Bewegung der Brücke 4 hin zur Bremsscheibe ermöglichen.

Gemäß der Erfindung ist weiterhin vorgesehen, dass sich quer zur Drehrichtung der Bremsscheibe, also radial, die Brücke 4 an der Bodenplatte 8 und/oder dem Bremssattel 1 abstützt.

Im Beispiel weisen die Brücke 4 und der Bremssattel 1 an der, bezogen auf die Mittelachse der Bremsscheibe unteren Seite der Brücke 4 Stützflächen 15, 15' auf, während gegenüberliegend, also nach außen gesehen, die Bodenplatte 8 mit einem Anschlagelement 13 versehen ist, das mit einer Anschlagfläche 14 der Brücke 4 im Sinne einer Abstützung korrespondiert.

Dabei sind auch die in radialer Richtung gesehenen Stützflächen 15, 15' bzw. die Anschlagfläche 14 plan ausgebildet.

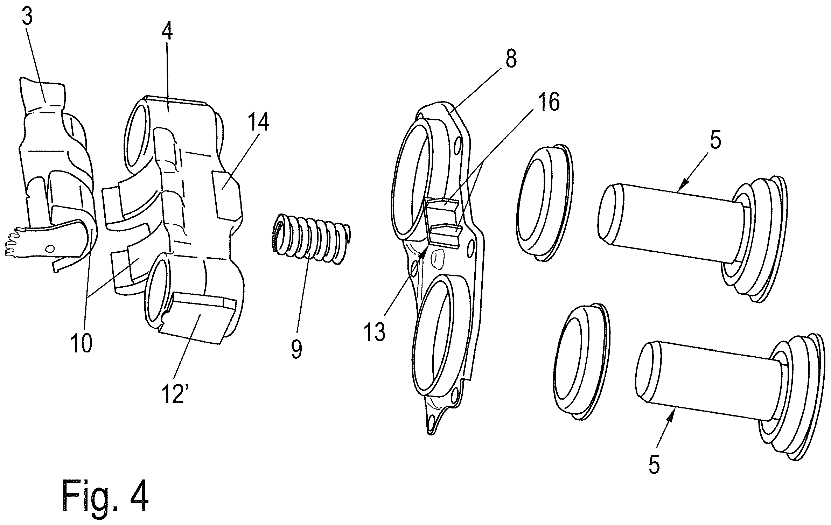

Das Anschlagelement 13 ist, wie besonders deutlich die Figur 4 wiedergibt, als Blechformteil ausgebildet und kann entweder einstückig mit der Bodenplatte 8 hergestellt oder durch Verschrauben, Vernieten, Verschweißen oder dergleichen verbunden sein.

Zur Stabilitätserhöhung, vor allem um beim Bremsen auftretende Kippkräfte der Brücke 4 aufnehmen zu können, weist das Anschlagelement 13 Rippen 16 auf, die im Sinne von Streben fungieren.

Im Bedarfsfall kann auf die Ausbildung der Stützflächen 15, 15' verzichtet werden, da die Kippbewegung der Brücke 4 beim Bremsen radial nach außen läuft, also zum Anschlagelement 13 hin.

### Bezugszeichenliste

- 1: Bremssattel
- 2: Zuspanneinrichtung
- 3: Bremshebel
- 4: Brücke
- 5: Bremsstempel
- 6: Druckstück
- 7: Bremsbelag
- 8: Bodenplatte
- 9: Druckfeder
- 10: Exzenterlager
- 11: Schwenkwelle
- 12: Stützfläche
- 12': Stützfläche
- 13: Anschlagelement
- 14: Anschlagfläche
- 15: Stützfläche
- 15': Stützfläche
- 16: Rippe

## Patentansprüche

1. Scheibenbremse für ein Nutzfahrzeug, mit einer in einem Bremssattel (1) angeordneten Zuspanneinrichtung (2), mit der bei einer Bremsung über eine oder zwei parallel und abständig zueinander in einer Brücke (4) angeordnete und durch eine einen Aufnahmeraum des Bremssattels (1) verschließende Bodenplatte (8) geführte Stellspindeln (5) ein Bremsbelag (7) an eine Bremsscheibe pressbar ist, wobei die Zuspanneinrichtung (2) einen schwenkbaren Bremshebel (3) aufweist, der an einem Ende als Exzenter ausgebildet ist und der sich einerseits am Bremssattel (1) als Widerlager und andererseits an der Brücke (4) abstützt, wobei bei einer Bremsung die Brücke (4) in Drehrichtung der Bremsscheibe seitlich am Bremssattel (1) anliegt, **dadurch gekennzeichnet, dass** sich die Brücke (4) bei einer Bremsung zusätzlich an der Bodenplatte (8) abstützt, wozu daran, bezogen auf die Mittelachse der Bremsscheibe, oberhalb der Brücke (4) ein Anschlagelement (13) angeordnet ist, an dem eine Anschlagfläche (14) der Brücke (4) anliegt.

2. Scheibenbremse nach Anspruch 1, **dadurch gekennzeichnet, dass** der Bremssattel (1) und die Brücke (4) miteinander korrespondierende Stützflächen (12, 12', 15, 15') aufweisen, wobei diese und die Anschlagfläche (14) sowie die zugeordnete Seite des Anschlagelementes (13) planeben ausgebildet sind,

3. Scheibenbremse nach Anspruch 1 oder 2, **dadurch gekennzeichnet, dass** das Anschlagelement (13) an die aus Blech gebildete Bodenplatte (8) angeformt ist.

4. Scheibenbremse nach einem der vorstehenden Ansprüche, **dadurch gekennzeichnet, dass** das Anschlagelement (13) kraft-, form- und/oder stoffschlüssig mit der Bodenplatte (8) verbunden ist.

5. Scheibenbremse nach einem der vorstehenden Ansprüche, **dadurch gekennzeichnet, dass** das Anschlagelement (13) zur Erhöhung der Biegesteifigkeit auf der der Anschlagfläche (14) abgewandten Seite mit Rippen (16) versehen ist.

6. Scheibenbremse nach Anspruch 2, **dadurch gekennzeichnet, dass** die Stützflächen (12, 12', 15, 15') sowie die Anschlagfläche (14) bei der Herstellung der Brücke (4) und des Bremssattels (1) durch Gießen angeformt sind.

## Claims

1. A disc brake for a utility vehicle comprising a brake application device (2) arranged in a brake caliper (1) by means of which brake application device, during braking, a brake lining (7) can be pressed against a brake disc by one or two adjusting spindles (5) that are arranged parallel to and at a distance from one another in a bridge (4) and guided by a base plate (8) which closes a receiving space of the brake caliper (1), wherein the brake application device (1) comprises a pivotable brake lever (3) which has one end designed as an excenter and is supported on one side on the brake caliper (1) as a counter bearing and on the other on the bridge (4), whereby during braking the bridge (4) laterally abuts the brake caliper (1) in the direction of rotation of the brake disc, **characterised in that** during braking the bridge (4) is also supported on the base plate (8), to which end there is arranged on said base plate, above the bridge (4) in relation to the central axis of the brake disc, a stop element (13) abutted by a stop surface (4) of the bridge (4).

2. A disk brake according to claim 1, **characterised in that** the brake caliper (1) and the bridge (4) comprise corresponding support surfaces (12, 12', 15, 15'), wherein said support surfaces, the stop surface (14) and the corresponding side of the stop element (13) are positioned in the same plane.

3. A disk brake according to one of claims 1 or 2, **characterised in that** the stop element (13) is preformed to the sheet-metal base plate (8).

4. A disc brake according to one of the preceding claims, **characterised in that** the stop element (13) is connected to the base plate (8) in a force fit, a form fit and/or by a bonded connection.

5. A disc brake according to one of the preceding claims, **characterised in that** the stop element (13) is provided with ribs (16) to increase the bending stiffness on the side facing away from the stop surface (14).

6. A disc brake according to claim 2, **characterised in that** the support surfaces (12, 12', 15, 15') and the stop surface (14) are formed by casting during the manufacture of the bridge (4) and the brake caliper (1).

## Revendications

1. Frein à disque pour un véhicule utilitaire, comprenant un dispositif (2) de serrage, qui est monté dans un étrier (1) de frein et par lequel, lors d'un freinage, une garniture (7) de frein peut, par une ou par deux broches (5) de réglage montées parallèlement et à distance l'une de l'autre dans un pontet (4) et guidées par une plaque (8) de fond fermant un espace de réception de l'étrier (1) de frein, être poussée sur un disque de frein, le dispositif (2) de serrage ayant un levier (3) de frein pivotant, qui est constitué à une extrémité sous la forme d'un excentrique et qui s'appuie d'une part sur l'étrier (1) de frein comme butée et d'autre part sur le pontet (4), le pontet (4) s'appliquant, lors du freinage, dans le sens de rotation du disque de frein, latéralement à l'étrier (1) de frein, **caractérisé en ce que** le pontet (4) s'appuie, lors d'un freinage, supplémentairement sur la plaque (8) de fond, un élément (13) de butée, auquel s'applique une surface (14) de butée du pontet (4), s'appuyant, à cet effet, rapporté à l'axe médian du disque de frein, au-dessus du pontet (4).

2. Frein à disque suivant la revendication (1) **caractérisé en ce que** l'étrier (1) de frein et le pontet (4) ont des surfaces (12, 12', 15, 15') d'appui se correspondant les unes aux autres, celles-ci et la surface (14) de butée, ainsi que les côtés associés de l'élément (13) de butée, étant constitués de manière plane.

3. Frein à disque suivant la revendication 1 ou 2, **caractérisé en ce que** l'élément (13) de butée vient de matière avec la plaque (8) de fond, en tôle.

4. Frein à disque suivant l'une des revendications précédentes, **caractérisé en ce que** l'élément (13) de butée est relié à complémentarité de force, de forme et/ou de matière à la plaque (8) de fond.

5. Frein à disque suivant l'une des revendications précédentes, **caractérisé en ce que** l'élément (13) de butée est pourvu, pour augmenter la résistance à la flexion, de nervures (16) du côté éloigné de la surface (14) de butée.

6. Frein à disque suivant la revendication 2, **caractérisé en ce que** les surfaces (12, 12', 15, 15') d'appui, ainsi que la surface (14) de butée, sont formées par coulée lors de la fabrication du pontet (4) et de l'étrier (1) de frein.
